# EUROPEAN PATENT SPECIFICATION

(11) **EP 2 979 245 B1**
(45) Date of publication and mention of the grant of the patent: **30.06.2021**
(21) Application number: 14719867.5
(22) Date of filing: 28.03.2014
(51) Int. Cl.: G06T 5/00, G06T 7/00

(54) **IMAGE REGISTRATION**
BILDAUFZEICHNUNG
ENREGISTREMENT D'IMAGE

(30) Priority: 29.03.2013 US 201361806461 P
(43) Date of publication of application: 03.02.2016
(73) Proprietor: Koninklijke Philips N.V., 5656 AG Eindhoven (NL); Philips GmbH, 20099 Hamburg (DE)
(72) Inventor: KABUS, Sven, 5656 AE Eindhoven (DE)
(74) Representative: Philips Intellectual Property & Standards
(86) International application number: PCT/IB2014/060245
(87) International publication number: WO 2014/155346

(56) References cited:
- EP-A1- 2 535 001
- EP-A1- 2 685 275
- US-A1- 2004 013 299
- US-A1- 2004 252 201
- US-A1- 2009 080 779
- US-A1- 2009 247 416
- US-A1- 2009 263 037
- US-A1- 2011 286 652
- FAISAL BEG M ET AL: "Computing Large Deformation Metric Mappings via Geodesic Flows of Diffeomorphisms", INTERNATIONAL JOURNAL OF COMPUTER VISION, KLUWER ACADEMIC PUBLISHERS, BO, vol. 61, no. 2, 1 February 2005 (2005-02-01), pages 139-157, XP019216431, ISSN: 1573-1405, DOI: 10.1023/B:VISI.0000043755.93987.AA

## Description

The following generally relates to image registration and more particularly to improving an accuracy of image registration, and is described with particular application to computed tomography (CT). However, the following is also amenable to other imaging modalities such as magnetic resonance imaging (MRI), Positron Emission Tomography (PET), Single Photon Emission Computed Tomography (SPECT), digital radiography, and/or other imaging modality.

A CT scanner generally includes an x-ray tube supported by a rotating frame. The rotating frame and the x-ray tube rotate around an examination region, and the x-ray tube emits radiation that traverses the examination region. A radiation sensitive detector is located opposite the x-ray tube, across the examination region, and detects radiation that traverses the examination region. The radiation sensitive detector generates a signal indicative of the detected radiation. A reconstructor reconstructs the signal, generating volumetric image data. An image processor can be used to process the image data and generate an image(s).

Image registration has been used to determine a correspondence between a tissue of interest in images from different image data sets. The application of image registration is broad, covering dynamic contrast imaging, motion compensation, change quantification in follow-up studies, etc. Non-rigid image registration is typically implemented as an iterative process in which an image similarity term (e.g., mutual information, sum of squared differences) is maximized, while an additional regularization term keeps the solution in some sense realistic (usually a certain smoothness of the resulting deformation field is wanted).

High-contrasted image edges (e.g. the diaphragm) are easier to detect than low-contrasted image edges (e.g., the lower boundary of the liver). As a consequence, registration schemes tend to align high-contrasted image edges better than low-contrasted ones. One mitigation approach includes emphasizing the similarity term at the cost of the regularization term. Unfortunately, the regularization term is needed to achieve a physiologically plausible result, and a weakened regularization may result in deformation of bone structures.

Another approach includes using spatially variable regularization to relax the regularization term for low-contrasted image edges. However, this requires prior knowledge such as a detailed segmentation, which may increase time, add complexity, and require user interaction (e.g., manual segmentation). Another approach includes using landmarks at low-contrasted image edges. Likewise, this may also require manual user effort to generate and place the landmarks. Another approach includes segmenting the tissue in all images and registering the segmented images. This approach is prone to error, e.g., if contrast is low.

US2004/0013299 provides a method for contrast enhanced registration with complex polynomial interpolation, which allows preserving information contents of the registered images. It maps distinct point to distinct points and preserves the angles in the images.

EP 2535001 provides a method for registration of diagnostic images taken for different time moments for the same patients allowing for quantification of the differences between both diagnostic images.

Aspects described herein address the above-referenced problems and others.

The following relates to improving an accuracy of image registration at least in a presence of low-contrasted tissue interfaces by introducing an intensity map, prior to a registration, and applying it to low-contrasted tissue edges. The registration algorithm does not need to be modified, but can be modified.

In one aspect, a method according to claim 1 is provided.

In another aspect, an image processing system according to claim 10 is provided.

In another aspect, a computer readable storage medium according to claim 11 is provided.

The invention may take form in various components and arrangements of components, and in various steps and arrangements of steps. The drawings are only for purposes of illustrating the preferred embodiments and are not to be construed as limiting the invention.
FIGURE 1 schematically illustrates an imaging system in connection with an image processing system including a processor and a memory with an image registration instruction.
FIGURE 2 schematically illustrates an example of the image registration module for implementing the image registration instruction that includes a bank of pre-stored intensity maps.
FIGURE 3 graphically illustrates an example of a high contrasted boundary of the liver and a low contrasted boundary of the liver.
FIGURE 4 graphically illustrates an intensity map in which a first sub-range of intensity value are untouched, a second sub-range of intensity values are scaled to increase a dynamic range therefore, and a third sub-range of intensity values is shifted with a constant value based on the scaling.
FIGURE 5 graphically illustrates an intensity map in which a first sub-range of intensity value are untouched, a second sub-range of intensity values are scaled to increase a dynamic range therefore, a first sub-set of a third sub-range of intensity values is shifted with a decreasing value based on the scaling, and a second sub-set of the third sub-range of intensity values is not scaled or shifted.
FIGURE 6 illustrates an example method for improving an accuracy of a registration in connection with tissue of interest with a low contrasted boundary.
FIGURE 7 schematically illustrates another example of the image registration module for implementing the image registration instruction that generates the intensity map on demand.

The following describes an approach to improving an accuracy of a registration of images, at least with respect to a low-contrasted tissue interface or boundary in the images. The approach, as discussed in greater detail below, includes using an intensity map, which increase a dynamic range of the intensity interval for tissue of interest, prior to determining a deformation field for the registration.

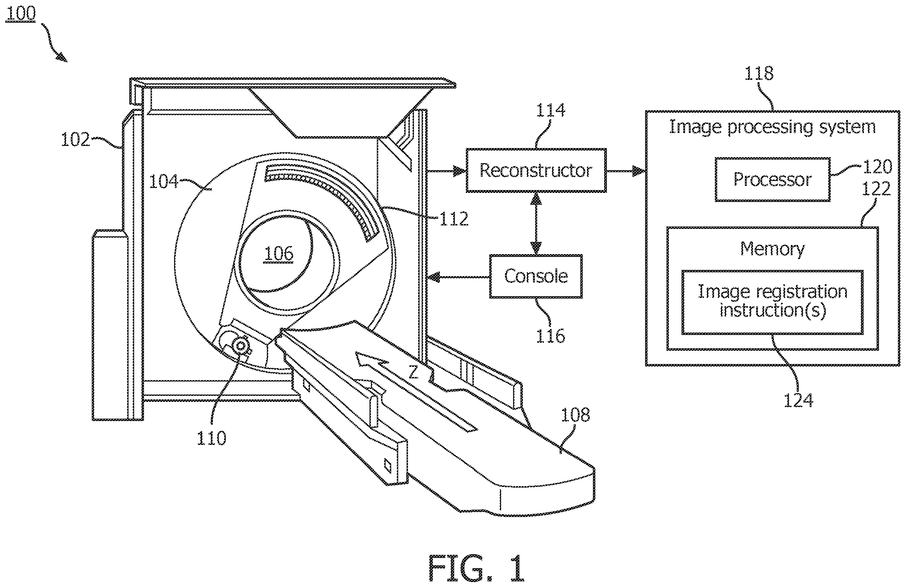

Initially referring to FIGURE 1, an imaging system 100 such as a CT scanner is illustrated. In other embodiments, the imaging system 100 may additionally or alternatively include an MRI scanner, a PET scanner, a SPECT scanner, an X-ray scanner, and/or other imaging modality scanner.

A generally stationary gantry 102 and a rotating gantry 104, which is rotatably supported by the stationary gantry 102 and rotates around an examination region 106 about a z-axis.

A subject support 108, such as a couch, supports an object or subject in the examination region 106.

A radiation source 110, such as an x-ray tube, is rotatably supported by the rotating gantry 104, rotates with the rotating gantry 104, and emits radiation that traverses the examination region 106.

A radiation sensitive detector array 112 subtends an angular arc opposite the radiation source 110 across the examination region 106. The radiation sensitive detector array 112 detects radiation traversing the examination region 106 and generates a signal indicative thereof for each detected photon.

A reconstructor 114 reconstructs the projection, generating volumetric image data indicative of a scanned portion of a subject or object located in the imaging region 106.

A computing system or computer serves as an operator console 116. The console 116 includes a human readable output device such as a monitor and an input device such as a keyboard, mouse, etc. Software resident on the console 116 allows the operator to interact with and/or operate the scanner 100 via a graphical user interface (GUI) or otherwise.

An image processing system 118 includes at least one computer processor 120 (e.g., a microprocessor) that executes at least one computer readable instruction stored in computer readable storage medium, such as physical memory 122 and other non-transitory storage medium. The at least one processor 120 may also executes a computer readable instruction(s) carried by a carrier wave, a signal and other transitory medium. In the illustrated embodiment, the computer readable instruction(s) includes an image registration instruction(s) 124.

As described in greater detail below, excutation of the image registration instruction(s) 124 by the at least one computer processor 120 causes generation and/or selection of an intensity map to apply for image registration. It is to be appreciated that by introducing the intensity map prior to the registration, low-contrasted image edges are strengthened and, therefore, aligned more equally or at least more similar to high-contrasted image edges.

The intensity map can be determined based on anatomy, imaging protocola, imaging modality , imaging application, and/or other information. This includes generating one or more intensity maps and storing the one or more intensity maps for subsequent use and/or generating an intensity map on demand. Optionally, an intensity map can be generated based on a segmentation of the tissue of interest. The segmentation can be automatic, semi-automatic, or manual, requiring user interaction.

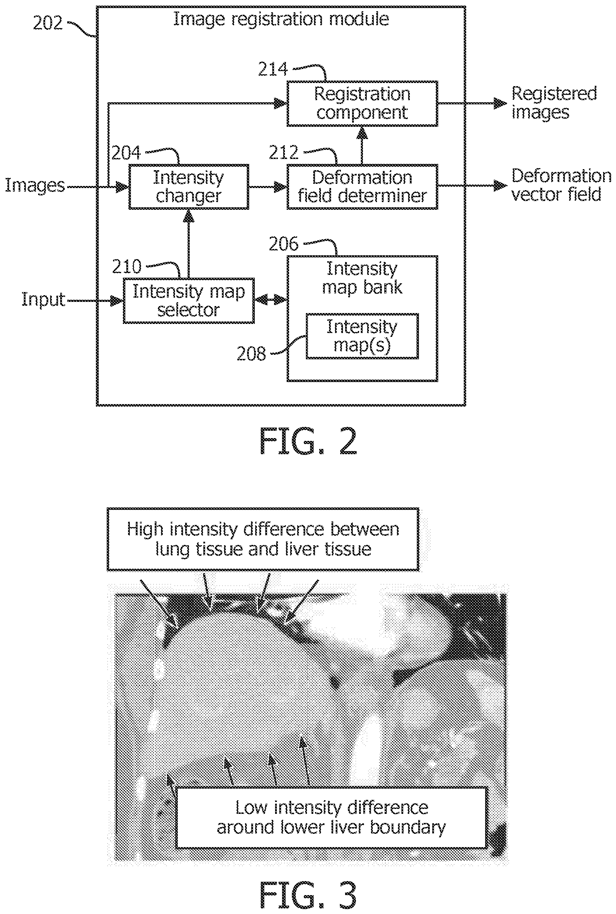

FIGURE 2 schematically illustrates an example of an image registration module 202 for implementing the image registration instruction(s) 124 (FIGURE 1) that includes pre-generated intensity maps.

The illustrated image registration module 202 receives, as an input, at least two images to register and outputs at least one of a deformation vector field (also referred to as motion vector field and deformation map) or registered images. The input images may be generated by the imaging system 100 and/or other imaging system, and can be obtained from the imaging system and/or a data repository such as a picture archiving and communication system (PACS), a radiology information system (RIS), a hospital information system (HIS), and/or other data repository.

An intensity changer 204 changes an intensity of at least a sub-portion of the pixels in the images based on an intensity map. This includes scaling intensities of pixels at edges of tissue of interest with low contrasted tissue boundaries. Such an interface includes, for example, the lower boundary of the liver. This can be seen in FIGURE 3, which shows a higher-contrasted liver/diaphragm boundary 302 and a lower-contrasted liver boundary 304. Tissue other than liver tissue is also contemplated herein.

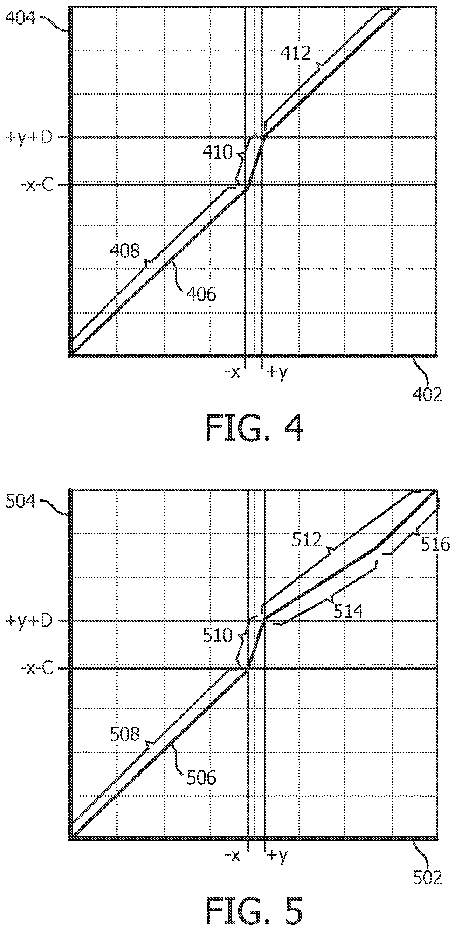

Returning to FIGURE 2, an intensity map bank 206 includes one or more intensity maps (intensity map(s)) 208, which are used by the intensity changer 204 to change pixel intensities. Generally, an intensity map 208 increases the dynamic range (i.e., the number of intensity levels) for a particular range of pixels corresponding to the particular tissue of interest. Examples of intensity maps 208 for liver tissue are graphically shown in FIGURES 4 and 5.

In FIGURE 4, an x-axis 402 represents pixels intensity values of the images to be registered, a y-axis 404 represents modified pixels intensity values, and a curve 406 represents an intensity map that maps the pixels intensity values of the images to be registered to the modified pixels intensity values. In the case of CT, the pixel intensity values can be in Hounsfield units (HU) or other units.

In this example, all intensities in a first region 408 are mapped 1:1. That is, the modified pixels intensity values and the pixels intensity values of the images to be registered are the same. For a second region 410, which represents pixel intensity values of the tissue of interest, a range of -x to +y is mapped to -x-C and +y+D, where x, y, C and D are real numbers and integers, and C may or may not be equal to D. The values of C and D represent a scaling of the dynamic range for the tissue of interest.

By way of example, if x=50, y=50, C=0, and D=200, -x and +y values of -50 and +50 on the x-axis 402 map to -x-C = 50 and +y+D=250 on the y-axis 404 such that there are 300 values (50+250 =300) to represent the intensity of the tissue of interest rather than 100 values (50+50=100), allowing for greater differentiation of lower contrasted tissue. The scaling can be linear, as shown, or non-linear, e.g., exponential.

In this example, all intensities in a third region 412 are equally shifted based on the scaling applied to the region 410. By way of example, continuing with the above example, intensities above 50 are all shifted by 200. For example, an x-axis value of 100 maps to a y-axis value of 300, an x-axis value of 250 maps to a y-axis value of 450, an x-axis value of 750 maps to a y-axis value of 950, etc.

In the above example, the intensity value range of the tissue of interest is symmetric about zero (-50 and +50). In another instance, the range is asymmetric about zero (-25 and +50), entirely positive (e.g., 50 to 100), or entirely negative (e.g., -50 to -25). In the above example, the symmetric intensity value range of the tissue of interest (-50 and +50) is mapped to an asymmetric range (-50 and +250) on the y-axis 404. In another instance, the symmetric intensity value range of the x-axis 402 is mapped to a symmetric range about zero on the y-axis 404.

In FIGURE 5, an x-axis 502 represents pixels intensity values of the images to be registered, a y-axis 504 represents modified pixels intensity values, a curve 506 represents an intensity map that maps the pixels values of the images to be registered to the modified pixels values. In this example, all intensities in a first region 508 are mapped 1:1, and the intensity values in a second region 510 are mapped similar to the mapping of the second region 410 of FIGURE 4.

Unlike the third region 412 of FIGURE 4, a third region 512 is split into a first sub-region 514 and a second sub-region 516. The first sub-region 514, instead of being entirely shifted by the scaling, converges or decreases back to a 1:1 mapping. The convergence can be linear, as shown, or non-linear, e.g., exponential. The second sub-region 516 is mapped similar to the mapping of the third region 412 of FIGURE 4, or 1:1. As such, tissue with a pixel value in the second sub-region 516 retains its original pixel value.

An intensity map 208 can be pre-determined or generated on demand, and the map bank 206 can store intensity maps 208 for a plurality of different tissues and/or combinations of tissue. For on-demand generation, the pixel value range for the particular tissue of interest can be obtained from the input and/or pre-stored in the map bank 206 and/or other storage. The tissue maps of FIGURES 4 and 5 include a single range that is scaled. In another instance, a tissue map may scale more than one range.

Returning to FIGURE 2, an intensity map selector 210 selects a suitable intensity map 208 from the intensity map bank 206 for the intensity shifter 204. As shown, the intensity map selector 210 does this based on an input. The input can be data indicative of the tissue of interest or information from which the tissue of interest can be determined such as anatomy, the imaging protocol, the imaging modality, the particular application, and/or other information.

A deformation vector field (DVF) generator 212 generates a deformation vector field for the intensity shifted images. In one non-limiting instance, the DVF generator 212 employs a non-rigid (or elastic) image registration algorithm. A suitable algorithm includes a representation and parameterization of the mapping between two or more image domains, an objective function combining an image similarity term and a regularization term, and an optimization scheme, e.g., gradient descend, conjugate gradients, etc.

The representation and parameterization can include, but is not limited to, grid of B-Spline control points, or image voxel wise translation vectors. Examples of a similarity term include, but are not limited to, mutual information, sum of squared differences, intensity correlation, etc. The regularization term ensures a certain degree of smoothness, by, e.g., penalizing first and/or second derivatives of the mapping field. The image similarity term and regularization term can be weighted, e.g., based on image modality, application, etc.

A registration component 214 registers the input images based on the generated deformation vector field. Again, the image registration module 202 outputs at least one of the deformation vector field or the registered images. The output can be visually displayed, stored, and/or otherwise utilized.

The above example is described in connection with the CT scanner illustrated in FIGURE 1. As discussed herein, the approach described herein is also applicable to other imaging modalities. The following describes an approach with MRI images.

For this, a rough segmentation of the organ of interest is created. The segmentation does not need to be exact. A distance transform is applied to the surface of the segmentation. All voxels, M, with a distance smaller than a given threshold (e.g. 20 mm) are collected.

The histogram of image intensities covered by M is evaluated. One peak of the histogram will belong to voxels from the organ (homogeneous intensities on the rim of the organ assumed), and the other peaks will belong to voxels from tissue adjacent to the organ of interest.

The most prominent peaks are selected. An intensity interval is defined such that one boundary of the interval is given by the smallest peak value, optionally with an added negative offset, and another boundary of the interval is given by the largest peak value, optionally with an added positive offset. The intensity interval is used to construct an intensity map.

The intensity map can be applied as discussed above in connection with FIGURE 2 and/or otherwise. For the former, this includes applying the intensity map to the images, performing an elastic registration, and applying the resulting deformation vector field to the original input images.

Likewise, the output of the image registration module 202 can be visually displayed, stored, and/or otherwise utilized.

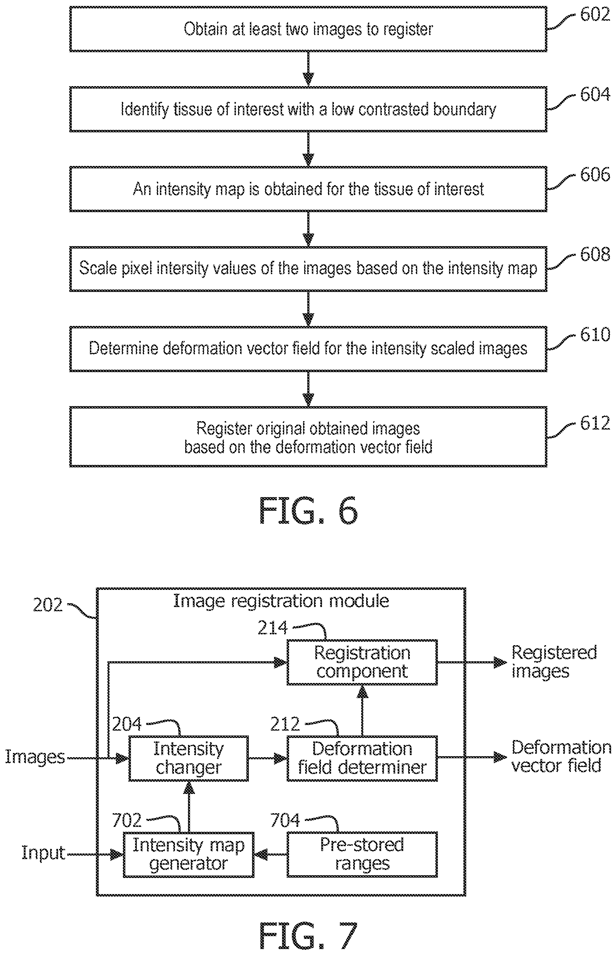

FIGURE 6 illustrates an example method for improving an accuracy of a registration in connection with tissue of interest with a low contrasted boundary.

It is to be appreciated that the ordering of the acts is not limiting. As such, other orderings are contemplated herein. In addition, one or more acts may be omitted and/or one or more additional acts may be included.

At 602, at least two images to register are obtained.

At 604, tissue of interest with a low contrasted boundary is identified.

At 606, an intensity map is obtained for the tissue of interest, as described herein and/or otherwise.

At 608, pixel intensity values of at least a sub-portion of the pixels (which correspond to the tissue of interest) are scaled based on the intensity map.

At 610, a deformation vector field is determined for the intensity scaled images.

At 612, the original at least two images are registered based on the deformation vector field.

The above may be implemented by way of computer readable instructions, encoded or embedded on computer readable storage medium, which, when executed by a computer processor(s), cause the processor(s) to carry out the described acts. Additionally or alternatively, at least one of the computer readable instructions is carried by a signal, carrier wave or other transitory medium.

FIGURE 7 illustrates a variation of the image registration module 202 of FIGURE 2. In this variation, image registration module 202 includes an intensity map generator 702. In this embodiment, the image registration module 202 generates intensity maps on demand rather than selecting pre-determined intensity maps.

Similarly, the input can include data indicative of the tissue of interest or information from which the tissue of interest can be determined such as the imaging protocol, the imaging modality, the particular application, and/or other information. The input may also include a range of pixel intensity values to scale and/or obtain the range from pre-stored ranges 704.

The invention has been described with reference to the preferred embodiments. Modifications and alterations may occur to others upon reading and understanding the preceding detailed description. It is intended that the invention be constructed as including all such modifications and alterations insofar as they come within the scope of the appended claims.

## Claims

1. A computer-implemented method, comprising:
(602) obtaining at least two images to register;
(604) receiving an input identifying a tissue of interest, wherein the identifying comprises segmenting the tissue of interest, applying a distance transform to a surface of the segmentation, wherein all voxels M with a distance smaller than a given threshold are collected, and evaluating a histogram of image intensities covered by M;
(606) constructing an intensity map using an intensity interval defined by the smallest and largest peak values of the histogram;
(608) increasing a dynamic range of a first sub-range (410, 510) of pixel intensity values of said at least two images based on the constructed intensity map, the first sub-range of pixel intensity values being for said tissue of interest, thereby creating at least two modified images;
(610) determining a deformation vector field between the at least two modified images; and
(612) registering the at least two images based on the deformation vector field.

2. The method of claim 1, the act of increasing the dynamic range comprising:
using the intensity map to map the first sub-range of pixel intensity values to a wider sub-range of pixel intensity values.

3. The method of claim 2, further comprising:
shifting a second sub-range (412) of pixel intensity values, which are higher than the first sub-range of pixel intensity values, by a constant value corresponding to the increase in the dynamic range of the first sub-range of pixel intensity values.

4. The method of claim 2, further comprising:
shifting a first sub-set (514) of a second sub-range (412) of pixel intensity values, which are higher than the first sub-range of pixel intensity values, by a decreasing value such that a first value of the first sub-set corresponds to the increase in the dynamic range of the first sub-range of pixel intensity values and a last value of the first sub-set is shifted by zero.

5. The method of claim 4, wherein a second sub-set (516) of the second sub-range of pixel intensity values, which are higher than the first sub-set of pixel intensity values, are not shifted.

6. The method of any of claims 3 to 5, wherein a third sub-set (408, 508) of the pixel intensity values, which are lower than the first sub-range of pixel intensity values, are not shifted.

7. The method of any of claims 1 to 6, wherein the dynamic range is linearly increased.

8. The method of any of claims 1 to 7, wherein the dynamic range is non-linearly increased.

9. The method of any of claims 1 to 8, further comprising:
increasing a dynamic range of at least one other sub-range of pixel intensity values of the at least two images.

10. An image processing system (118), comprising:
a processor (120);
a memory (122) encoded with at least one image registration instruction (124), wherein the processor executes the at least one image registration instruction, which causes the processor to:
obtain at least two images to register;
receive an input identifying a tissue of interest, wherein the identifying comprises segmenting the tissue of interest, applying a distance transform to a surface of the segmentation, wherein all voxels M with a distance smaller than a given threshold are collected, and evaluating a histogram of image intensities covered by M;
construct an intensity map using an intensity interval defined by the smallest and largest peak values of the histogram;
increase a dynamic range of a first sub-range of pixel intensity values of said at least two images based on the constructed intensity map, the first sub-range of pixel intensity values being for said tissue of interest, thereby creating at least two modified images;
determine a deformation vector field between the at least two modified images; and
register the at least two images based on the deformation vector field.

11. A computer readable storage medium encoded with computer readable instructions, which, when executed by a processer, causes the processor to perform the method of claim 1.

## Patentansprüche

1. Eine von einem Computer auszuführende Methode, die folgende Schritte umfasst:
(602) Abrufen von mindestens zwei zu erfassenden Bildern;
(604) Abrufen einer Eingabe, die ein zu untersuchendes Gewebe identifiziert, wobei das Identifizieren das Segmentieren des zu untersuchenden Gewebes sowie das Verändern des Abstands zu einer Oberfläche des Segments umfasst, wobei alle Voxel M mit einem Abstand, der kleiner als ein vorgegebener Schwellenwert ist, gesammelt werden, sowie Auswerten eines Histogramms von Bildintensitäten, die von M abgedeckt werden;
(606) Erstellen einer Intensitätskarte anhand eines Intensitätsintervalls, das durch die kleinsten und größten Spitzenwerte des Histogramms definiert ist;
(608) Erhöhen des dynamischen Bereichs eines ersten Teilbereichs (410, 510) der Pixelintensitätswerte der mindestens zwei Bilder anhand der erstellten Intensitätskarte, wobei der erste Teilbereich der Pixelintensitätswerte dem zu untersuchenden Gewebe entspricht, sodass mindestens zwei modifizierte Bilder erzeugt werden;
(610) Ermitteln eines Deformationsvektorfelds zwischen den mindestens zwei modifizierten Bildern; und
(612) Erfassen der mindestens zwei Bilder beruhend auf dem Deformationsvektorfeld.

2. Die Methode gemäß Anspruch 1, wobei das Erhöhen des dynamischen Bereichs folgenden Schritt umfasst:
Verwenden der Intensitätskarte, um den ersten Teilbereich von Pixelintensitätswerten auf einen breiteren Teilbereich von Pixelintensitätswerten abzubilden.

3. Die Methode gemäß Anspruch 2, die zudem folgenden Schritt umfasst:
Verschieben eines zweiten Teilbereichs (412) von Pixelintensitätswerten, die höher sind als die des ersten Teilbereichs von Pixelintensitätswerten, um einen konstanten Wert, der dem Erhöhen des dynamischen Bereichs des ersten Teilbereichs von Pixelintensitätswerten entspricht.

4. Die Methode gemäß Anspruch 2, die zudem folgenden Schritt umfasst:
Verschieben einer ersten Teilmenge (514) des zweiten Teilbereichs (412) von Pixelintensitätswerten, die höher sind als die des ersten Teilbereichs von Pixelintensitätswerten, um einen abnehmenden Wert, sodass ein erster Wert der ersten Teilmenge dem Erhöhen des dynamischen Bereichs des ersten Teilbereichs von Pixelintensitätswerten entspricht und ein letzter Wert der ersten Teilmenge um Null verschoben wird.

5. Die Methode gemäß Anspruch 4, wobei eine zweite Teilmenge (516) des zweiten Teilbereichs von Pixelintensitätswerten, die höher sind als die der ersten Teilmenge von Pixelintensitätswerten, nicht verschoben wird.

6. Die Methode gemäß einem der Ansprüche 3 bis 5, wobei eine dritte Teilmenge (408, 508) der Pixelintensitätswerte, die niedriger sind als die des ersten Teilbereichs von Pixelintensitätswerten, nicht verschoben wird.

7. Die Methode gemäß einem der Ansprüche 1 bis 6, wobei der dynamische Bereich linear erhöht wird.

8. Die Methode gemäß einem der Ansprüche 1 bis 7, wobei der dynamische Bereich nicht linear erhöht wird.

9. Die Methode gemäß einem der Ansprüche 1 bis 8, die zudem folgenden Schritt umfasst:
Erhöhen des dynamischen Bereichs von mindestens einem weiteren Teilbereich der Pixelintensitätswerte der mindestens zwei Bilder.

10. Ein Bildverarbeitungssystem (118), das Folgendes umfasst:
einen Prozessor (120);
einen Speicher (122), der mit mindestens einer Bilderfassungsanweisung (124) codiert ist, wobei der Prozessor die mindestens eine Bilderfassungsanweisung ausführt, die den Prozessor zu folgenden Schritten veranlasst:
Abrufen von mindestens zwei zu erfassenden Bildern;
Abrufen einer Eingabe, die ein zu untersuchendes Gewebe identifiziert, wobei das Identifizieren das Segmentieren des zu untersuchenden Gewebes sowie das Verändern des Abstands zu einer Oberfläche des Segments umfasst, wobei alle Voxel M mit einem Abstand, der kleiner als ein vorgegebener Schwellenwert ist, gesammelt werden, sowie Auswerten eines Histogramms von Bildintensitäten, die von M abgedeckt werden;
Erstellen einer Intensitätskarte anhand eines Intensitätsintervalls, das durch die kleinsten und größten Spitzenwerte des Histogramms definiert ist;
Erhöhen des dynamischen Bereichs eines ersten Teilbereichs der Pixelintensitätswerte der mindestens zwei Bilder anhand der erstellten Intensitätskarte, wobei der erste Teilbereich der Pixelintensitätswerte dem zu untersuchenden Gewebe entspricht, sodass mindestens zwei modifizierte Bilder erzeugt werden;
Ermitteln eines Deformationsvektorfelds zwischen den mindestens zwei modifizierten Bildern; und
Erfassen der mindestens zwei Bilder beruhend auf dem Deformationsvektorfeld.

11. Ein von einem Computer lesbares Speichermedium, das mit von einem Computer lesbaren Anweisungen codiert ist, die den Prozessor dazu veranlassen, die Methode gemäß Anspruch 1 auszuführen.

## Revendications

1. Procédé mis en œuvre par ordinateur, comprenant :
(602) l'obtention d'au moins deux images à enregistrer ;
(604) la réception d'une entrée identifiant un tissu d'intérêt, dans lequel l'identification comprend la segmentation du tissu d'intérêt, l'application d'une transformation de distance à une surface de la segmentation, dans lequel tous les voxels M présentant une distance inférieure à un seuil donné sont collectés, et l'évaluation d'un histogramme d'intensités d'image couvertes par les M ;
(606) la construction d'une carte d'intensité à l'aide d'un intervalle d'intensité défini par les valeurs de crête les plus petites et les plus grandes de l'histogramme ;
(608) l'augmentation d'une plage dynamique d'une première sous-plage (410, 510) de valeurs d'intensité de pixel desdites au moins deux images en fonction de la carte d'intensité construite, la première sous-plage de valeurs d'intensité de pixel étant pour ledit tissu d'intérêt, créant ainsi au moins deux images modifiées ;
(610) la détermination d'un champ de vecteurs de déformation entre les au moins deux images modifiées ; et
(612) l'enregistrement des au moins deux images en fonction du champ de vecteurs de déformation.

2. Procédé selon la revendication 1, l'étape d'augmentation de la plage dynamique comprenant :
l'utilisation de la carte d'intensité pour mettre en correspondance la première sous-plage de valeurs d'intensité de pixel avec une sous-plage supérieure de valeurs d'intensité de pixel.

3. Procédé selon la revendication 2, comprenant en outre :
le décalage d'une seconde sous-plage (412) de valeurs d'intensité de pixel, lesquelles sont supérieures à la première sous-plage de valeurs d'intensité de pixel, d'une valeur constante correspondant à l'augmentation de la plage dynamique de la première sous-plage de valeurs d'intensité de pixel.

4. Procédé selon la revendication 2, comprenant en outre :
le décalage d'un premier sous-ensemble (514) d'une seconde sous-plage (412) de valeurs d'intensité de pixel, lesquelles sont supérieures à la première sous-plage de valeurs d'intensité de pixel, d'une valeur décroissante de telle sorte qu'une première valeur du premier sous-ensemble correspond à l'augmentation de la plage dynamique de la première sous-plage de valeurs d'intensité de pixel et une dernière valeur du premier sous-ensemble est décalée de zéro.

5. Procédé selon la revendication 4, dans lequel un deuxième sous-ensemble (516) de la seconde sous-plage de valeurs d'intensité de pixel, lesquelles sont supérieures au premier sous-ensemble de valeurs d'intensité de pixel, n'est pas décalé.

6. Procédé selon l'une quelconque des revendications 3 à 5, dans lequel un troisième sous-ensemble (408, 508) de valeurs d'intensité de pixel, lesquelles sont inférieures à la première sous-plage de valeurs d'intensité de pixel, n'est pas décalé.

7. Procédé selon l'une quelconque des revendications 1 à 6, dans lequel la plage dynamique est augmentée de manière linéaire.

8. Procédé selon l'une quelconque des revendications 1 à 7, dans lequel la plage dynamique est augmentée de manière non linéaire.

9. Procédé selon l'une quelconque des revendications 1 à 8, comprenant en outre :
l'augmentation d'une plage dynamique d'au moins une autre sous-plage de valeurs d'intensité de pixel des au moins deux images.

10. Système de traitement des images (118), comprenant :
un processeur (120) ;
une mémoire (122) codée à l'aide d'au moins une instruction d'enregistrement d'image (124), dans lequel le processeur exécute l'au moins une instruction d'enregistrement d'image, ce qui amène le processeur :
à obtenir au moins deux images à enregistrer ;
à recevoir une entrée identifiant un tissu d'intérêt, dans lequel l'identification comprend la segmentation du tissu d'intérêt, l'application d'une transformation de distance à une surface de la segmentation, dans lequel tous les voxels M présentant une distance inférieure à un seuil donné sont collectés, et l'évaluation d'un histogramme d'intensités d'image couvertes par les M ;
la construction d'une carte d'intensité à l'aide d'un intervalle d'intensité défini par les valeurs de crête les plus petites et les plus grandes de l'histogramme ;
à augmenter une plage dynamique d'une première sous-plage de valeurs d'intensité de pixel desdites au moins deux images en fonction de la carte d'intensité construite, la première sous-plage de valeurs d'intensité de pixel étant pour ledit tissu d'intérêt, créant ainsi au moins deux images modifiées ;
à déterminer un champ de vecteurs de déformation entre les au moins deux images modifiées ; et
à enregistrer les au moins deux images en fonction du champ de vecteurs de déformation.

11. Support d'enregistrement lisible par ordinateur codé à l'aide des instructions lisibles par ordinateur, lesquelles, lorsqu'elles sont exécutées par un processeur, amènent le processeur à mettre en œuvre le procédé selon la revendication 1.
